# DEMANDE DE BREVET EUROPEEN

(11) **EP 1 361 110 A1**
(43) Date de publication de la demande: **12.11.2003**
(21) Numéro de dépôt: 03291097.8
(22) Date de dépôt: 07.05.2003
(51) Int. Cl.: B60P 1/44

(54) **Véhicule de transport de marchandises à plateau élévateur**

(30) Priorité: 07.05.2002 FR 0205745
(71) Demandeur: Grosse, Gérard, 76270 Neufchatel-en-Bray (FR)
(72) Inventeur: Grosse, Gérard, 76270 Neufchatel-en-Bray (FR)
(74) Mandataire: Jacobson, Claude

(57) **Abrégé**

Ce véhicule de transport de marchandises comprend un châssis, une plate-forme (4) de transport portée solidairement par le châssis, et un plateau élévateur (26) mobile entre une position haute dans laquelle le plateau est en affleurement de la plate-forme, et une position basse dans laquelle le plateau est disposé hors du plan de la plate-forme (4), une échancrure (22) étant ménagée dans la plate-forme pour recevoir le plateau (26) en position haute. Le véhicule comporte au moins une paire de bielles (28) de liaison du plateau (26) à la plate-forme (4), chaque bielle étant articulée à la fois sur le plateau élévateur (26) et par rapport à la plate-forme (4) en des points d'articulation qui définissent les quatre sommets d'un parallélogramme déformable, les points d'articulation de la ou de chaque paire de bielles (28) par rapport à la plate-forme (4) étant alignés selon une direction sensiblement parallèle au plan de la plate-forme (4), et l'axe (30) d'articulation de la ou chaque bielle (28) sur le plateau élévateur (26) étant situé plus à l'intérieur que l'axe (32) d'articulation de la même bielle par rapport à la plateforme (4) lorsque le plateau élévateur est en position haute. Pour mettre en mouvement le plateau (26) depuis sa position haute, il est prévu des moyens de dégagement vers l'extérieur du plateau.

## Description

La présente invention concerne un véhicule de transport de marchandises, et se rapporte plus particulièrement à un véhicule du type défini dans le préambule de la revendication 1.

Généralement, les véhicules de transport de marchandises sont pourvus d'une caisse dont les parois latérales et/ou la paroi arrière sont équipées de portes coulissantes et/ou de rideaux, notamment escamotables sous le toit de la caisse.

On connaît des véhicules pourvus d'un plateau élévateur arrière qui est rabattable en position verticale contre la face arrière de la caisse du véhicule, et déployable en position horizontale au-delà de l'arrière de la caisse. De la même façon, certaines caisses sont équipées de plateaux élévateurs latéraux déployables en position horizontale sur un côté de la caisse. Ce genre de plateaux déployables est relié à la plate-forme de transport par une ou deux paires de bielles articulées par rapport à la fois à la plate-forme et au plateau.

De tels plateaux déployables en saillie de la caisse posent des problèmes d'encombrement car leur déploiement nécessite un espace important si on veut préserver une sécurité optimale pour l'utilisateur en ayant un plateau de taille suffisante, augmentant considérablement l'encombrement du véhicule sur la chaussée et entravant ainsi la circulation lors de livraisons en zone urbaine.

Par le passé, on a proposé de commander les déplacements du plateau élévateur soit par des vérins, notamment hydrauliques, comme dans GB 2 134 874, DE 295 13 034 ou EP 0 818 351, soit par des bras rigides de guidage comme dans US 2,536,954. En cas de disfonctionnement des vérins ou des organes de manoeuvre des bras rigides, il existe un risque pour que le plateau élévateur ne soit pas retenu de manière certaine en position haute, notamment s'il est chargé. De plus, de tels moyens de commande sont souvent encombrants et difficiles à implanter.

Le but de la présente invention est de proposer un véhicule du type précité, qui permette de disposer d'un plateau élévateur dont le déplacement implique un faible encombrement extérieur à la plate-forme, et dont la retenue en position haute est fiable, tout en disposant de moyens de commande du déplacement faciles à installer et peu encombrants, sans réduire la capacité de chargement de la plate-forme.

A cet effet, l'invention a pour objet un véhicule du type précité, qui présente les caractéristiques de la partie caractérisante de la revendication 1.

D'autres caractéristiques de ce véhicule, prises isolément ou selon toutes les combinaisons techniquement possibles, sont définies dans les revendications dépendantes.

L'invention sera mieux comprise à la lecture de la description qui va suivre, donnée uniquement à titre d'exemple et faite en se référant aux dessins sur lesquels :
- la figure 1 est une vue en perspective d'un camion de transport de marchandises illustrant un état de l'art, muni d'un plateau élévateur en position haute ;
- la figure 2 est une vue analogue à celle de la figure 1, à plus grande échelle, montrant le plateau élévateur en position basse ;
- la figure 3 est une vue partielle arrière en coupe du camion de la figure 2 ;
- la figure 4 est une vue schématique en plan d'un camion selon l'invention, montrant des possibilités d'implantation de plateaux élévateurs ;
- les figures 5 et 6 sont des vues analogues à celle de la figure 3, illustrant deux autres états de l'art ; et
- les figures 7 et 8 sont des vues analogues à celle de la figure 3 représentant deux variantes de réalisation de camions selon l'invention.

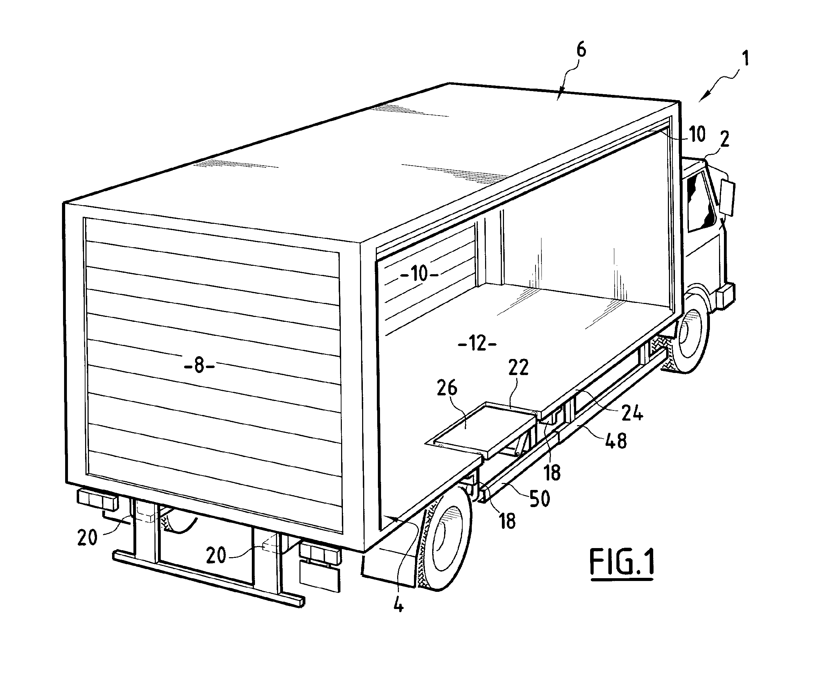

Sur les figures 1 à 3 est représenté un véhicule 1 de transport de marchandises comprenant une cabine 2 pour le conducteur et une plate-forme 4 de transport de marchandises portant une caisse 6. La caisse est munie d'une porte arrière 8 et de portes latérales coulissantes 10, escamotables sous le toit de la caisse.

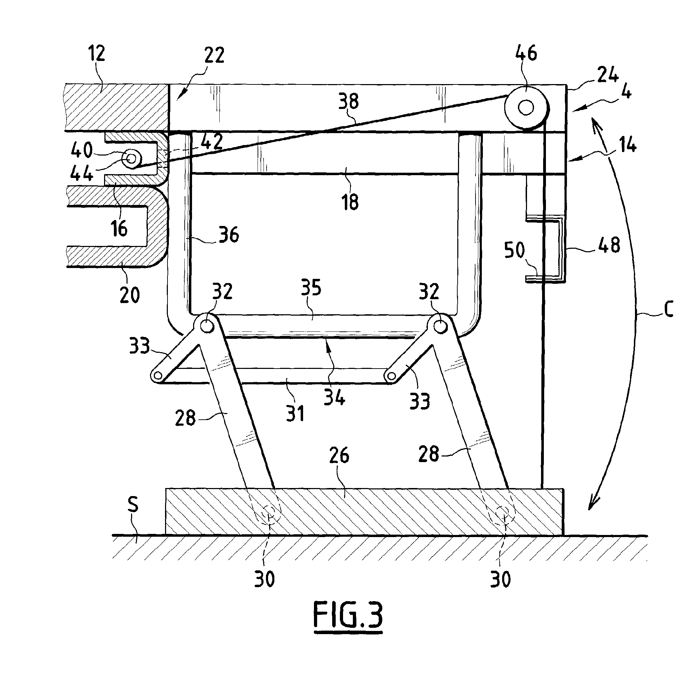

Comme représenté plus en détail sur la figure 3, la plate-forme 4 comporte un plateau de transport 12 formant le sol de la caisse 6 et un cadre rigide 14 de support du plateau. Ce cadre est constitué d'une paire de longerons 16 s'étendant au niveau de la partie médiane du plateau 12, et de traverses 18 reliées rigidement aux longerons 16, par exemple par soudage.

La plate-forme 4 est supportée par des longerons 20 du châssis du véhicule, les longerons 16 de la plate-forme, couramment appelés «faux-longerons », étant bridés sur les longerons 20 du châssis.

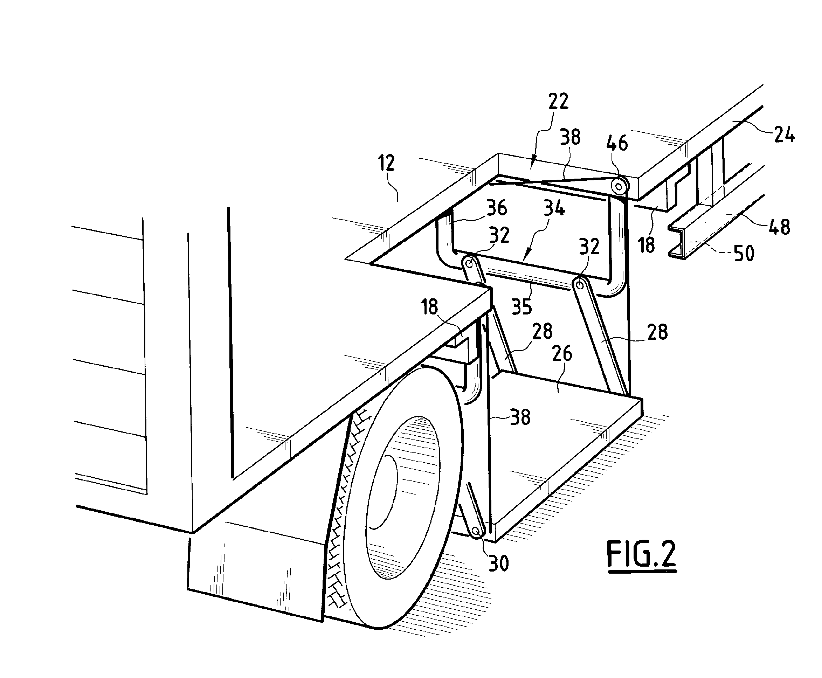

En revenant aux figures 1 et 2, une échancrure 22 de forme rectangulaire est ménagée dans le plateau 12 de la plate-forme 4. Cette échancrure débouche sur une rive 24 du plateau qui coopère avec une des portes coulissantes 10, et est située entre deux traverses 18.

L'échancrure 22 est adaptée pour recevoir un plateau élévateur 26, de forme sensiblement complémentaire de celle de l'échancrure.

Ce plateau élévateur 26 est relié de façon articulée à la plate-forme 4 par deux paires de bielles rectilignes 28. Ces paires de bielles sont disposées de part et d'autre du plateau. Chaque bielle 28 est, à l'une de ses extrémités, articulée autour d'un premier axe 30 sur le plateau élévateur 26, et est, à son autre extrémité, articulée autour d'un second axe 32 sur un arceau rigide 34 de la plate-forme, qui est solidarisé aux traverses 18 définissant entre elles l'échancrure 22.

Les bielles 28 d'une même paire sont toutes deux articulées par rapport à la plate-forme 4 sur une branche 35 d'un même arceau 34, qui s'étend sensiblement parallèlement au plateau 12 de la plate-forme 4. Chaque arceau 34 comporte en outre une branche intérieure 36 qui s'étend suivant une partie de sa longueur au contact à la fois de la face extérieure des longerons 20 du châssis du véhicule et de la face extérieure des faux-longerons 16 de la plate-forme de transport 4.

Le plateau élévateur 26, guidé par les bielles 28, est ainsi mobile par rapport à la plate-forme de transport 4 entre une position haute (figure 1) dans laquelle sa face supérieure affleure celle du plateau 12 de la plate-forme 4, et une position basse (figures 2 et 3) dans laquelle il est hors du plan de la plate-forme.

De plus, les bielles 28 d'une même paire sont de même longueur et restent parallèles l'une à l'autre durant le déplacement du plateau 26 de sorte que les points d'articulation en 30 et 32 forment les sommets d'un parallélogramme déformable.

Ainsi, durant le déplacement du plateau entre ses positions haute et basse, le plateau 26 reste sensiblement parallèle au plateau de transport 12, c'est-à-dire parallèle au sol, tout en décrivant un trajet incurvé noté C sur la figure 3.

Pour que le plateau élévateur 26 soit au contact du sol S en position basse, comme représenté sur les figures 2 et 3, les axes 32 sont situés à une distance du sol S inférieure à la longueur des bielles 28. De plus, afin que le plateau 26 en position basse sur le sol S soit disposé sensiblement à l'aplomb de l'échancrure 22, les axes 32 sont disposés sensiblement à une égale distance de la plate-forme 4 et du sol S, ce qui revient à ce que la distance séparant les axes 32 de la plate-forme 4 est sensiblement égale à la moitié de la distance séparant le plateau 26 en position haute et le même plateau en position basse.

Par ailleurs, pour limiter autant que possible l'encombrement du plateau 26 à l'extérieur du contour de la plate-forme 4 lors du déplacement de ce plateau 26, les bielles 28 sont inclinées par rapport à la normale au plateau 12 de la plate-forme lorsque le plateau est en position haute, l'axe 30 de chaque bielle étant plus à l'extérieur que l'axe 32 de la même bielle.

De plus, une barre transversale 31 relie les extrémités respectives de branches saillantes 33 de chaque bielle 28 d'une même paire. Plus précisément, chaque branche saillante s'étend rigidement depuis la partie d'extrémité de la bielle, reliée à l'arceau 34. A chacune de ses extrémités, la barre 31 est articulée sur la branche correspondante 33 de façon à être parallèle à la branche 35 de l'arceau et à former avec le plateau 26 un autre parallélogramme déformable.

La structure articulée obtenue comporte donc deux parallélogrammes déformables qui présentent l'avantage de ne pas être plats simultanément lors du déplacement du plateau entre ses positions haute et basse. Tout risque de déséquilibrage du plateau lorsque le parallélogramme, formé par le plateau, les bielles 28 et la branche 35 de l'arceau 34, s'aplatit, est ainsi écarté.

Pour commander le déplacement du plateau élévateur 26, le véhicule 1 comporte deux éléments souples de traction 38, par exemple des sangles. Chaque sangle est attachée, à une de ses extrémités, au plateau élévateur 26, et reliée, à son autre extrémité, à un tambour d'entraînement 40, de préférence commun aux deux sangles 38.

Ce tambour est disposé entre les deux faux-longerons 16, les sangles 38 empruntant des ouvertures traversantes 42 ménagées dans les faux-longerons 16. Le tambour 40 est rotatif autour de son axe défini par un arbre 44, de façon à bobiner et débobiner les sangles 38. Un moteur non représenté, par exemple un moteur électrique, est relié à l'arbre 44 pour son entraînement. Ce moteur possède un frein adapté pour imposer une vitesse maximale prédéterminée lors du débobinage du tambour 40. Avantageusement, le tambour 40 est équipé à ses extrémités de flasques latéraux adaptés pour guider la sangle et forme ainsi une bobine.

Deux poulies 46 de renvoi des sangles 38 sont montées respectivement sur les faces en regard du plateau de transport 12 qui délimitent l'échancrure 22. Ces poulies 46 sont destinées à guider les sangles lors du déplacement du plateau élévateur. Chaque poulie est disposée de façon que le point d'enroulement de la sangle correspondante 38 soit plus haut, ou au moins sensiblement à la même hauteur, que le point de fixation de la sangle sur le plateau élévateur 26 pour toutes les positions du plateau.

Le véhicule 1 comporte en outre une barre anti-encastrement 48 (figures 1 et 2) dont une partie 50 située en regard de la trajectoire du plateau élévateur 26 est escamotable, par exemple à l'intérieur de la barre anti-encastrement.

L'utilisation du plateau élévateur 26 du véhicule 1 est la suivante :

On commence par ouvrir la porte latérale 10 et par dégager la partie escamotable 50 de la barre anti-encastrement 48.

Après avoir chargé des marchandises sur le plateau 26 depuis la plate-forme 4, on actionne le moteur d'entraînement du tambour 40 de façon à ce que la sangle 38 se débobine. Sous l'effet combiné du poids des marchandises et de l'inclinaison des bielles 28, le plateau élévateur descend vers le bas en décrivant la trajectoire courbe C, tout en restant parallèle au sol. Le frein intégré du moteur empêche le plateau de prendre une vitesse trop importante.

En fin de course de descente, le plateau élévateur 26 occupe la position basse des figures 2 et 3. Il est cependant possible d'arrêter le plateau 26 dans des positions intermédiaires.

Les opérations de chargement se font bien entendu en sens inverse.

Le plateau élévateur du véhicule n'engendre ainsi qu'un faible encombrement latéral lors de ses déplacements entre ses positions haute et basse, notamment lorsque les bielles 28 sont fortement inclinées par rapport à la verticale pour le plateau en position haute. De plus, aucun montant ou structure rigide n'occupe de place dans la zone de chargement de la caisse 6, le plateau de transport 12 étant totalement utilisable pour entreposer des marchandises.

Les moyens de commande du déplacement du plateau élévateur, formés des sangles 38, du tambour d'entraînement 40 et du moteur, sont des organes mécaniques à longue durée de vie et d'installation aisée.

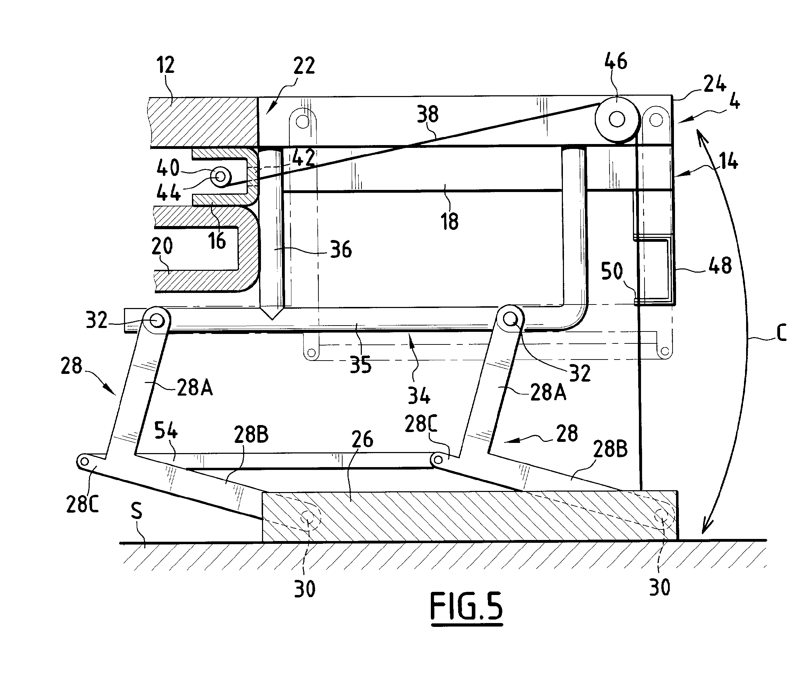

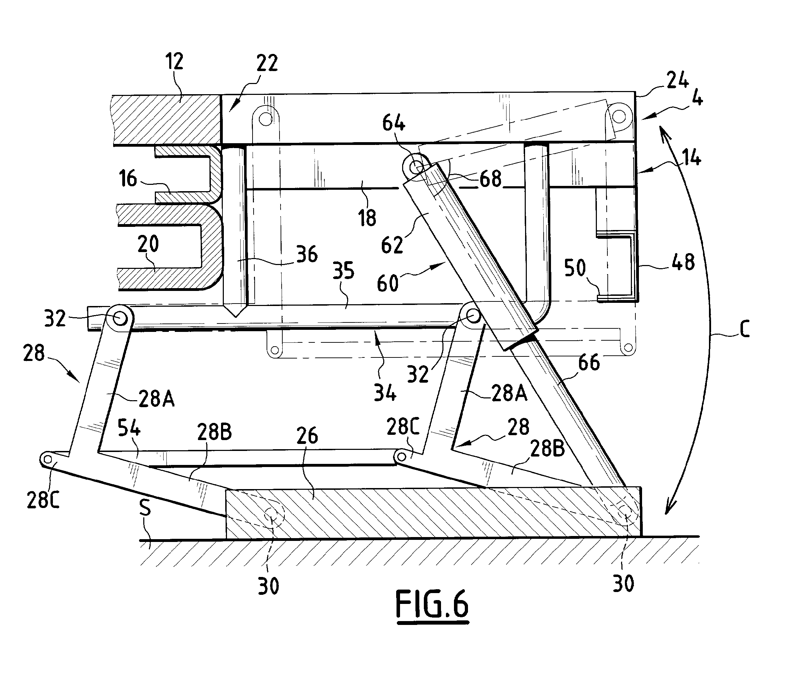

Sur les figures 5 et 6 sont représentées des variantes de l'état de l'art, les bielles 28 étant représentées, pour la position basse du plateau, en traits pleins, et, pour la position haute du plateau, en traits mixtes.

Sur la figure 5 est représentée une première variante du véhicule des figures 1 à 3, qui ne se différencie de ce dernier que par la forme et la disposition des bielles 28. Plus précisément, contrairement aux bielles rectilignes des figures précédentes, chaque bielle 28 de la figure 5 comporte deux branches 28A, 28B sensiblement perpendiculaires l'une à l'autre, la branche 28A étant articulée sur la branche 35 parallèle au plan de la plate-forme 4 et la branche 28B étant articulée sur le plateau élévateur 26.

De plus, les axes d'articulation 30 des deux bielles 28 d'une même paire sont situés dans les parties d'extrémités intérieure et extérieure du plateau élévateur 26, de façon à limiter l'étendue, suivant la largeur du plateau, des parties de plateau en porte-à-faux.

La forme en L des bielles 28 permet de positionner les axes d'articulation 32 plus à l'intérieur que pour les bielles des figures 1 à 3, tout en tenant compte de l'encombrement transversal des longerons 20 du châssis du véhicule. La branche 28A est ainsi dimensionnée de façon à placer l'axe d'articulation 32 de la bielle intérieure de chaque paire au-dessous des longerons du châssis. L'encombrement latéral extérieur du plateau lors de son déplacement s'en trouve réduit.

De plus, une barre transversale 54 relie les extrémités respectives de prolongements 28C de chaque bielle 28. Chaque prolongement 28C s'étend rigidement en saillie de la branche 28A, dans le prolongement et à l'opposé de la branche 28B. A chacune de ses extrémités, la barre 54 est articulée sur le prolongement correspondant 28C de façon à être parallèle à la branche 35 et à former avec le plateau 26 un parallélogramme déformable.

La structure obtenue comporte ainsi deux parallélogrammes déformables, sensiblement analogues aux deux parallélogrammes décrits plus haut en regard de la figure 3.

Sur la figure 6 est représentée une autre variante du véhicule 1 qui se différencie essentiellement des véhicules précédemment décrits par la nature des moyens de commande du déplacement du plateau élévateur 26.

Dans cette variante, l'ensemble formé par les sangles, les poulies de renvoi et le dispositif d'entraînement motorisé est remplacé par deux vérins rectilignes 60, chaque vérin étant disposé entre la plate-forme 4 et le plateau élévateur 26. Les vérins employés sont par exemple des vérins hydrauliques.

Chaque vérin 60 comporte un corps 62 articulé par rapport à la plate-forme 4, par exemple au niveau d'un point d'articulation 64 sur une des traverses 18 qui délimitent entre elles l'échancrure 22. Chaque vérin 60 comporte également une tige 66 mobile en translation par rapport au corps, dont l'extrémité libre est articulée sur le plateau élévateur 26, par exemple autour d'un des axes d'articulation 30. L'allongement de la tige du vérin commande le déplacement du plateau élévateur 26 de sa position haute à sa position basse, et le raccourcissement de cette tige commande le mouvement inverse.

Le positionnement du vérin 60 par rapport à l'axe 32 d'articulation de la bielle extérieure 28 est choisi de façon que le mouvement de descente du plateau 26 soit assuré par un allongement continu de la tige 66. Plus précisément, l'axe 32 d'articulation de la bielle extérieure reste située à l'extérieur d'un champ angulaire 68 formé par les positions extrêmes de la tige 66 lorsque le plateau passe de ses position haute à basse.

En variante non représentée, chaque vérin 60 est remplacé par un vérin dont la tige n'est pas articulée directement sur le plateau élévateur 26 comme ci-dessus, mais articulée sur une des deux bielles 28 d'une même paire.

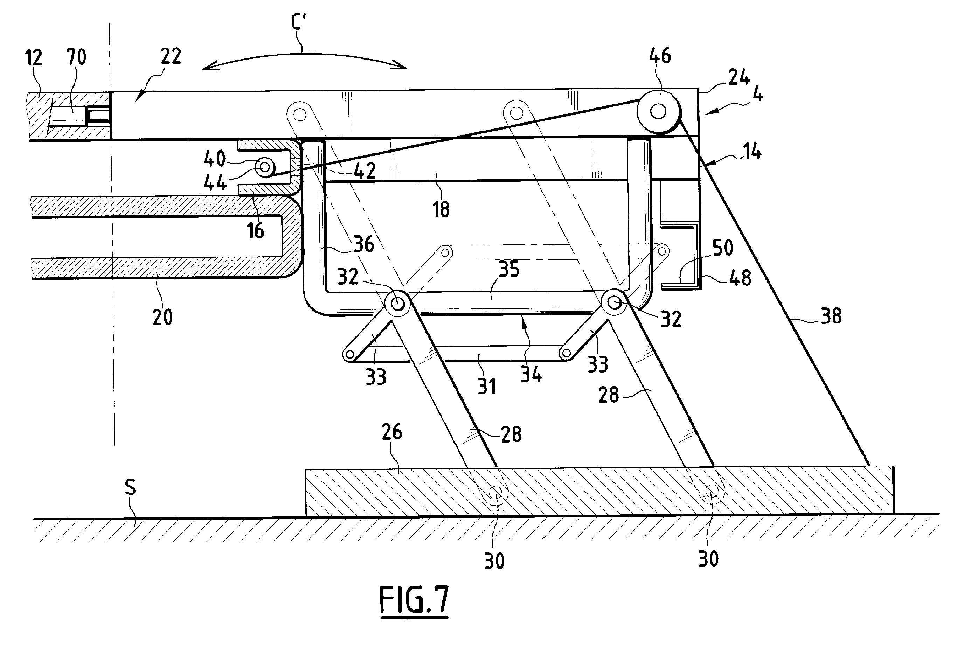

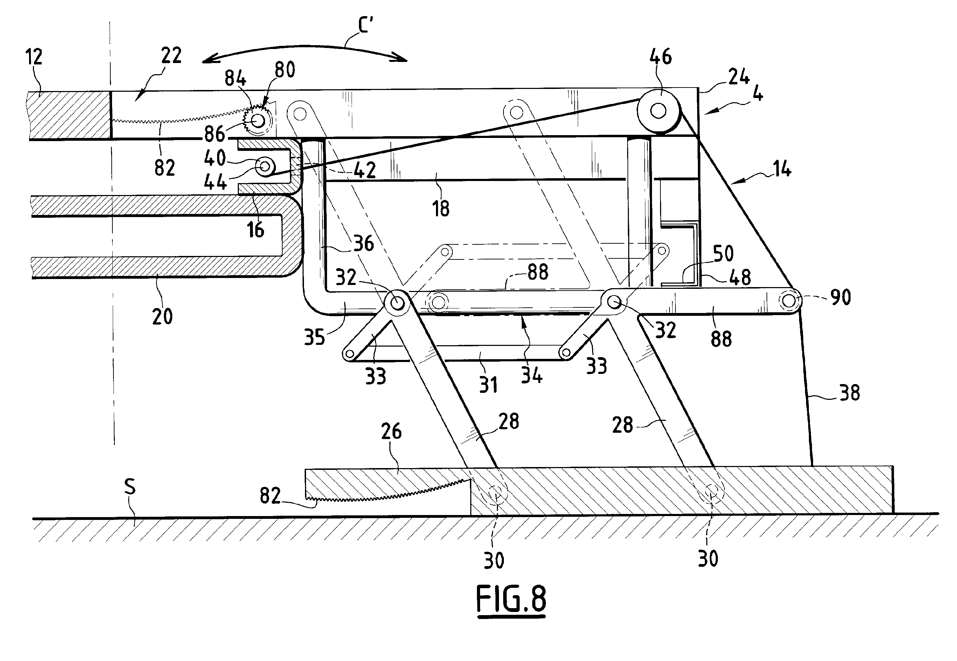

Sur les figures 7 et 8 sont représentées deux variantes de camions selon l'invention, dont les éléments communs avec les véhicules précédemment décrits portent les mêmes références.

Le plateau 26 présente, pour cette variante, une largeur égale à sensiblement la moitié de celle du plateau 12 de la plate-forme de transport 4.

De plus, la branche 35 sur laquelle sont articulées les bielles 28 par rapport à la plate-forme 4 est située plus proche du sol que de la plate-forme de sorte que le plateau 26 ne se retrouve pas sous les longerons 20 lorsqu'il est en position basse sur le sol S.

Lorsque le plateau élévateur est en position haute, l'axe d'articulation 30 de chaque bielle 28 est situé plus à l'intérieur que l'axe d'articulation 32, de sorte que la présence d'un chargement sur le plateau élévateur 26 a tendance à maintenir le plateau en appui sur la face dirigée vers l'extérieur de l'échancrure 22. Les moyens de commande du déplacement du plateau élévateur 26 comportent donc, en plus des éléments cités précédemment, un actionneur 70 de poussée vers l'extérieur du plateau élévateur 26, adapté pour déplacer le plateau depuis sa position haute à une position intermédiaire dans laquelle les bielles 28 sont dans une configuration proche de celle des bielles du plateau élévateur en position haute de la figure 1, c'est-à-dire avec l'axe d'articulation 30 de chaque bielle située plus à l'extérieur que l'axe d'articulation 32.

Le déplacement du plateau élévateur 26 de sa position haute à cette position intermédiaire s'accompagne de l'éloignement de ce plateau du sol S, suivant une trajectoire incurvée C'. Puis la trajectoire du plateau en déplacement jusqu'à sa position basse est analogue à la trajectoire C décrite plus haut. Ainsi, ni les bielles 28, ni le plateau élévateur 26 ne butent dans les longerons 20 du châssis du véhicule lors des déplacements du plateau 26 entre ses positions haute et basse.

L'actionneur 70 est par exemple un vérin hydraulique, à tige en appui directement sur le chant intérieur du plateau élévateur 26 lorsque ce dernier est en position haute.

Une variante non représentée selon l'invention consiste à combiner les véhicules des figures 6 et 7 en remplaçant les sangles 38 de la figure 7 par un ou deux vérins de commande analogues aux vérins 60 de la figure 6.

Une autre variante non représentée selon l'invention consiste à combiner les véhicules des figures 5 et 7 en remplaçant les bielles rectilignes 28 de la figure 7 par les bielles coudées 28 de la figure 5 reliées par la barre transversale 54.

La variante de la figure 8 se distingue de celle de la figure 7 essentiellement par le remplacement de l'actionneur de poussée 70 par un dispositif à crémaillère 80 comportant une crémaillère 82 solidaire de la face tournée vers le sol S du plateau 26 et un disque denté d'entraînement 84 en prise avec la crémaillère. Le disque est lié en rotation à un axe 86 à même d'être entraîné en rotation par un moteur électrique non représenté, par exemple fixé à la face tournée vers le sol du plateau de transport 12 de la plate-forme 4. Ce moteur est avantageusement le même que celui utilisé pour entraîner le tambour 40. En outre, le tambour 40 est avantageusement porté par le même arbre que le disque 84.

Le profil de la crémaillère 82 forme un arc de cercle de courbure adaptée pour déplacer le plateau 26 suivant la trajectoire incurvée C' décrite en regard de la figure 7.

Les moyens de commande des déplacements du plateau 26 du véhicule de la figure 8 comportent en outre, avantageusement, une bielle 88 d'accroissement du couple de relevage par la sangle 38 du plateau depuis sa position basse. Plus précisément, cette bielle est, à une de ses extrémités, reliée rigidement à la bielle 28 située le plus à l'extérieur. A son extrémité libre, la bielle 88 est équipée d'un élément de guidage 90, tel qu'un patin ou une roulette. Lorsque le plateau 26 se rapproche de sa position basse ou commence de s'en écarter, la bielle 88 se trouve disposée entre la poulie 46 et le plateau, l'élément de guidage étant adapté pour recevoir et guider la sangle 38.

L'utilisation du plateau 26 du véhicule de la figure 8 est sensiblement analogue à celle pour le véhicule de la figure 7. Lorsque le plateau est déplacé depuis sa position basse vers sa position haute, la bielle 88 éloigne la sangle 38 de l'axe d'articulation 32 le plus à l'extérieur, et ainsi assure la génération d'un couple de relevage plus important que celui exercé lors du relevage du plateau de la figure 7 par exemple.

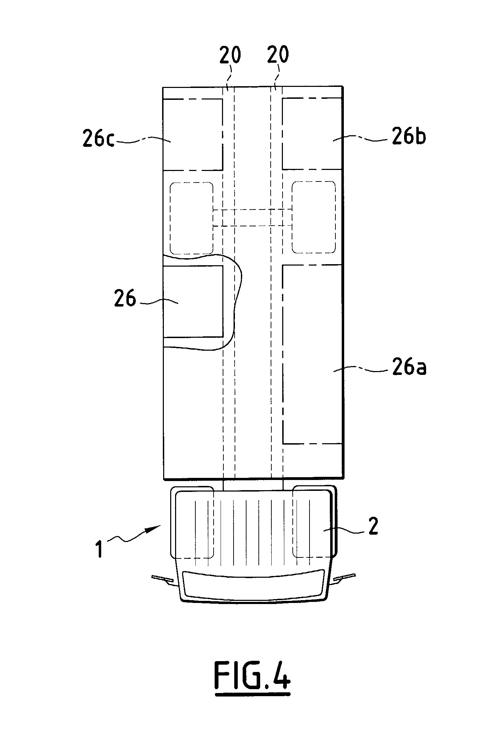

Dans les ensembles décrits ci-dessus, le véhicule 1 comporte un seul plateau élévateur en regard d'une des portes latérales 10. En variante, le véhicule 1 comporte un tel plateau en regard de chaque porte latérale 10 et/ou située dans la partie arrière de la plate-forme 4, derrière les roues arrière du véhicule. De telles possibilités sont représentées en traits mixtes sur le schéma de la figure 4, les emplacements correspondants étant référencés respectivement 26a, 26b et 26c.

De plus, diverses longueurs du plateau élévateur 26 sont envisageables, comme représenté pour le plateau de l'emplacement 26a de la figure 4.

Par ailleurs, bien que les exemples décrits plus haut portent sur des véhicules comportant une caisse 6, il est envisageable d'équiper une plate-forme de transport nue d'un plateau élévateur articulé comme le plateau 26.

Enfin, diverses variantes et compléments au véhicule selon l'invention sont envisageables :
- l'arceau rigide 34 est remplacé par une ou plusieurs barres rigides portant les axes d'articulation 32, ces barres étant solidarisées à la plate-forme 4 ; l'une de ces barres est avantageusement disposée de façon analogue à la barre 36 de l'arceau 34 de façon à ce que les faux-longerons 16 et les longerons 20 s'opposent au basculement vers l'intérieur de cette barre ;
- le moteur électrique est remplacé par un actionneur hydraulique, par exemple relié à un circuit de fluide sous pression dont est pourvu le véhicule ;
- les sangles 38 sont remplacées par des chaînes ou des câbles ;
- les poulies de renvoi 46 sont remplacées par des anneaux de guidage, enchâssés sur le plateau 12 de la plate-forme de transport 4 ;
- un système de verrouillage du plateau élévateur 26 en position haute est prévu ; et/ou
- des capteurs sont prévus pour détecter la tension des sangles 38, et ainsi assurer l'arrêt automatique du moteur d'entraînement lorsque le plateau est en position basse (sangle détendue) ou en position haute (sangle tendue à l'excès).

## Revendications

1. Véhicule de transport de marchandises, comprenant :
- un châssis,
- une plate-forme (4) de transport portée solidairement par le châssis,
- au moins un plateau élévateur (26) mobile par rapport à la plate-forme (4) entre une position haute dans laquelle le plateau est en affleurement de la plate-forme, et une position basse dans laquelle le plateau est disposé hors du plan de la plate-forme et en-dessous dudit plan, une échancrure (22) qui débouche sur un bord (24) de la plate-forme de transport (4) étant ménagée dans ladite plate-forme pour recevoir le plateau élévateur (26) en position haute,
- des moyens de commande pour le déplacement du plateau élévateur (26) entre ses positions haute et basse, et
- au moins une paire de bielles (28) de liaison du plateau élévateur (26) à la plate-forme (4), adaptée pour guider ledit plateau entre ses positions haute et basse, chaque bielle étant articulée à la fois sur le plateau élévateur (26) et par rapport à la plate-forme (4) en des points d'articulation qui, pour la ou chaque paire de bielles (28), définissent les quatre sommets d'un parallélogramme déformable, les points d'articulation de la ou de chaque paire de bielles (28) par rapport à la plate-forme (4) étant alignés selon une direction sensiblement parallèle au plan de la plate-forme (4), et l'axe (30) d'articulation de la ou chaque bielle (28) sur le plateau élévateur (26) étant situé plus à l'intérieur que l'axe (32) d'articulation de la même bielle par rapport à la plate-forme (4) lorsque le plateau élévateur est en position haute,
**caractérisé en ce que** les moyens de commande comportent à la fois des premiers moyens de commande (70 ; 80) adaptés pour dégager vers l'extérieur le plateau élévateur (26) depuis sa position haute à une position intermédiaire dans laquelle l'axe (30) d'articulation de la ou chaque bielle (28) sur le plateau élévateur (26) est situé plus à l'extérieur que l'axe (32) d'articulation de la même bielle par rapport à la plate-forme (4), et des seconds moyens de commande (38, 40 ; 60) adaptés pour commander le déplacement du plateau élévateur (26) entre ladite position intermédiaire et sa position basse.

2. Véhicule suivant la revendication 1, **caractérisé en ce que** les seconds moyens de commande comportent au moins une sangle de traction (38) fixée au plateau élévateur (26) ou à une des bielles (28) et un tambour d'entraînement (40) auquel est reliée la sangle, ledit tambour étant adapté pour bobiner et débobiner la sangle.

3. Véhicule suivant la revendication 2, **caractérisé en ce que** le tambour (40) d'entraînement de la ou de chaque sangle (38) est adapté pour limiter la vitesse d'entraînement de la sangle.

4. Véhicule suivant l'une des revendications 2 ou 3, **caractérisé en ce que** le tambour (40) est équipé de flasques latéraux de guidage de la sangle (38).

5. Véhicule suivant l'une quelconque des revendications 2 à 4, **caractérisé en ce que** lesdits seconds moyens de commande comportent au moins un organe (46) de guidage de la sangle (38) lors de son déplacement par l'organe d'entraînement (40).

6. Véhicule suivant l'une quelconque des revendications 2 à 5, **caractérisé en ce qu'**il comporte au moins une bielle (88) d'accroissement du couple de rotation appliqué sur le plateau élévateur (26) par la sangle (38), une extrémité de ladite bielle d'accroissement (88) étant adaptée pour s'appuyer sur la sangle lorsque le plateau élévateur se rapproche ou s'écarte de sa position basse.

7. Véhicule suivant la revendication 1, **caractérisé en ce que** les seconds moyens de commande comportent un actionneur rectiligne (60) comprenant un corps (62) et un élément mobile (66) en translation par rapport au corps, ledit corps (62) étant articulé par rapport à la plate-forme (4) et ledit élément mobile (66) étant articulé sur le plateau élévateur (26) ou sur des bielles (28).

8. Véhicule suivant l'une quelconque des revendications précédentes, **caractérisé en ce que** les premiers moyens de commande comportent un actionneur (70) comprenant une tige de poussée sur le plateau élévateur (26) dans sa position haute.

9. Véhicule suivant l'une quelconque des revendications 1 à 7, **caractérisé en ce que** les premiers moyens de commande comportent une crémaillère (82) fixée au plateau élévateur (26) et un organe d'entraînement (84) en prise avec la crémaillère, relié à la plate-forme (4).

10. Véhicule suivant l'une quelconque des revendications précédentes, **caractérisé en ce que** la largeur du plateau élévateur (26) est sensiblement égale à la moitié de la largeur de la plate-forme de transport (4).

11. Véhicule suivant l'une quelconque des revendications précédentes, **caractérisé en ce que** la ou chaque bielle (28) présente une forme en L, l'axe d'articulation (32) d'au moins une des bielles de la ou de chaque paire de bielles (28) par rapport à la plate-forme de transport (4) étant situé sous le châssis du véhicule.

12. Véhicule suivant l'une quelconque des revendications précédentes, **caractérisé en ce que** les bielles (28) de la ou de chaque paire de bielles sont articulées sur un élément (34) solidarisé à la plate-forme (4) et qui s'étend en partie au contact de longerons (20) du châssis et de faux-longerons (16) de la plate-forme (4).

13. Véhicule suivant l'une quelconque des revendications précédentes, caractérisé en qu'il comporte une caisse (6) pourvue d'une porte (10) et reposant sur la plate-forme (4), ladite porte (10) étant refermable sur le bord (24) de la plate-forme (4) sur lequel débouche l'échancrure (22).

14. Véhicule suivant la revendication 13, **caractérisé en ce que** ladite porte (10) est une porte relevable ou escamotable sous le toit de la caisse (6).
